# EUROPÄISCHE PATENTANMELDUNG

(11) **EP 1 365 044 A1**
(43) Veröffentlichungstag der Anmeldung: **26.11.2003**
(21) Anmeldenummer: 02011461.7
(22) Anmeldetag: 24.05.2002
(51) Int. Cl.: C23C 28/00

(54) **MCrAl-Schicht**

(71) Anmelder: SIEMENS AKTIENGESELLSCHAFT, 80333 München (DE); FORSCHUNGSZENTRUM JÜLICH GMBH, 52428 Jülich (DE)
(72) Erfinder: Quadakkers, Dr. Willem J., 6363 EG Wijnandsrade (NL); Stamm, Dr. Werner, 45481 Mühlheim a.d. Ruhr (DE)
(74) Vertreter: Berg, Peter, Dipl.-Ing.

(57) **Zusammenfassung**

MCrAl-Schichten nach dem Stand der Technik zeigen häufig Abplatzen der thermisch gewachsenen Aluminiumoxidschicht (TGO) auf Grund thermisch induzierter Spannungen oft ab, was das Oxidationsverhalten oder das Haftvermittlungsverhalten für keramische Wärmedämmschichten deutlich reduziert.

Eine erfindungsgemäße MCrAl-Schicht ist derart konzipiert, dass die darauf entstehende TGO eine Mikroporosität aufweist und somit dehnungstolerant ist. Die Mikroporosität in der TGO wird durch gezielte Zugabe von Elementen in die MCrAl-Schicht gewährleistet.

## Beschreibung

Die Erfindung betrifft eine MCrAl-Schicht für hochtemperaturbelastete Bauteile, insbesondere für eine Turbinenschaufel, insbesondere für eine Gasturbine.

Metallische Komponenten, die bei hohen Temperaturen eingesetzt werden, müssen in vielen Bereichen der Technik durch Schichtsysteme gegen den oxidierenden, korrosiven und/oder degradierenden Angriff der Betriebsatmosphäre geschützt werden. Für den Bereich Gasturbinen, d.h. Flugtriebwerke und industrielle stationäre Gasturbinen, ist es seit vielen Jahren Stand der Technik die Hochtemperaturkomponenten gegen die Degradation durch Aufbringen von Schichten vom Typ MCrAl (M= Fe, Co, Ni) oder β-NiAl zu schützen.
Die MCrAl-Schichten werden üblicherweise mittels Vakuum- oder Luftplasmaspritzen auf die metallische Hochtemperaturkomponente aufgebracht.
Die β-NiAl-Schichten werden über Alitierverfahren aufgebracht.
Diese Arten von Schutzschichten werden, abhängig von der jeweiligen Komponente und den Betriebsbedingungen, sowohl als reine Oxidations- und Korrosionsschutzschicht als auch in Form von Haftvermittlerschichten für keramische Wärmedämmschichten, beispielsweise auf Zirkonoxidbasis, eingesetzt.

In beiden genannten Anwendungsfällen beruht die Schutzwirkung der Schichtsysteme auf einer Aluminiumoxidschicht, die sich bei den hohen Betriebstemperaturen auf diesen Schichten bildet. Zum Erzielen einer geringen Wachstumsrate und einer guten Haftung der Aluminiumoxidschicht enthalten die MCrAl- und β-NiAl-Schichten üblicherweise geringe Mengen sauerstoffaffiner Elemente, insbesondere Yttrium.
Um die Aluminiumoxidbildung auch während eines Langzeiteinsatzes zu gewährleisten, muss der Aluminiumgehalt in dem Schichtsystem ausreichend hoch sein. Bei β-NiAl-Schichten ist dies üblicherweise etwa 25 - 30wt%, während die MCrAl-Schichten etwa 8 - 14 wt% Aluminium enthalten. Die MCrAl-Schichten haben im Vergleich zu den β-NiAl-Schichten den Vorteil, dass sie weniger spröde sind und außerdem korrosionsbeständiger in schwefelhaltigen Betriebsgasen sind.

Aufgrund von Laboruntersuchungen und Betriebserfahrungen hat sich gezeigt, dass die Langzeiteigenschaften und die Funktion zur Sicherheit der MCrAl-Schichten maßgeblich von der Haftung der thermisch gewachsenen Oxidschicht (TGO) auf Aluminiumoxidbasis, die sich auf den Oberflächen bei den hohen Betriebstemperaturen bildet, bestimmt wird. Dies gilt sowohl beim Einsatz der MCrAl-Schichten zwecks Oxidations- und Korrosionsschutz einer metallischen Komponente, jedoch auch insbesondere im Falle einer Anwendung als Haftvermittlerschicht für keramische Wärmedämmschichten.

Die Probleme mit der Haftung der TGO beruhen vorwiegend auf der Tatsache, dass beim Abkühlen der MCrAl beschichteten Komponente in und in der Nähe der TGO thermisch induzierte Spannungen auftreten, die auf die Unterschiede im thermischen Ausdehnungskoeffizienten zwischen der MCrAl-Schicht und der TGO auf Aluminiumoxidbasis zurückzuführen sind. Wenn während des Langzeiteinsatzes wachstumsbedingte Risse in der Nähe der Grenzfläche zwischen TGO und MCrAl-Schicht entstehen, führen die thermisch induzierten Spannungen zum Abplatzen der TGO.

Beim Einsatz des MCrAl-Werkstoffs als reine Oxidations- und Korrosionsschicht einer metallischen Komponente, führt das regelmäßige Abplatzen der TGO und die darauf folgende Neubildung einer Oxidschicht zu einem beschleunigten Verbrauch des deckschichtbildenden Elements Aluminium und somit zu einer Verkürzung der Lebensdauer der MCrAl-Schicht.

Beim Einsatz der MCrAl-Schicht als Haftvermittlerschicht für keramische Wärmedämmschichten wird ein Abplatzen der TGO unmittelbar ein Abplatzen und damit ein katastrophales Versagen der Wärmedämmschicht bewirken.

Bisher wurde versucht, durch ein Überplatinieren der MCrAl-Schicht mit niedrigen Aluminiumgehalten von etwa 8wt% eine Schichtstruktur mit guter Verzahnung zur Keramik zu erreichen. Dies bedeutet jedoch das Aufbringen einer weiteren Schicht.

Die US-PS 5,741,556 zeigt eine MCrAl-Schicht mit Yttrium, bei der Stickstoff als Inertgas bei der Herstellung der Schicht verwendet wird.

Die US-PS 5,981,091 zeigt eine MCrAl-Schicht, die Hafnium, Yttrium, Kohlenstoff und Stickstoff enthalten kann. Bei diesem Wärmedämmschichtsystem wird jedoch eine mit Platin angereicherte Schicht auf die MCrAl-Schicht aufgebracht.

Die US-PS 4,774,149 offenbart eine MCrAl-Schicht mit Hafnium, Yttrium und einem Stickstoffgehalt im Pulver, der jedoch unerwünscht ist und auf ein Minimum reduziert werden soll.

Die US-PS 5,780,171 offenbart eine MCrAl-Schicht mit Hafnium und Yttrium, wobei beim Herstellen der Schicht Stickstoff als Trägergas verwendet wird.

Die US-PS 5,652,028 offenbart eine MCrAl-Schicht der Zusammensetzung NiCoCrAl.

Die WO 99/23270 offenbart eine MCrAl-Schicht der Lanthan und Hafnium zugesetzt ist.

Die GB 2 243 161 A offenbart eine MCrAl-Schicht mit Zusätzen von Zirkonium, Silizium, Tantal, Hafnium, Yttrium, Scandium oder Lanthan.

Die US-PS 5,141,821 offenbart eine MCrAl-Schicht, mit eingeschlossenen Partikeln von Karbiden, um das Abrasivverhalten der Schicht zu verbessern. Die MCrAl-Schicht kann weiterhin Zirkonium, Hafnium und Tantal enthalten.

Es ist daher Aufgabe der Erfindung eine MCrAl-Schicht aufzuzeigen, bei der ein Abplatzen der Aluminiumoxidschicht nicht stattfindet oder nur noch in geringem Maße.

Die Aufgabe wird durch eine MCrAl-Schicht gemäss den Patentansprüchen 1 und 2 gelöst.

In den Unteransprüchen sind weitere vorteilhafte Ausgestaltungen einer MCrAl-Schicht aufgelistet.

Der Erfindung liegt die Erkenntnis zugrunde, dass eine gute Haftung der TGO auf der MCrAl-Schicht positiv durch eine Mikroporosität der TGO beeinflusst wird.
Dabei sollten die in der TGO vorliegenden Poren einen Durchmesser von 10 bis 500 nm aufweisen. Die Porenabstände betragen dabei 30 bis 600 nm, wobei der Porenabstand mit zunehmender Porengröße zunimmt.
Die positive Wirkung der Mikroporosität beruht auf der Tatsache, dass die beim Abkühlen auftretenden thermischen Spannungen durch Dehnungen, die in der Aluminiumoxidschicht im Mikrobereich auftreten, abgebaut werden können. In hochdichten TGO's ist dies nicht möglich, da bereits geringste Dehnungen zum katastrophalen Risswachstum und somit zum Abplatzen der TGO führen.
Mikroporöse TGO's sind somit dehnungstoleranter und besser geeignet zum Abbau von thermisch induzierten Spannungen als hochdichte TGO's.

Die beispielsweise verwendete MCrAl-Schicht ist eine NiCoCrAl-Schicht und weist Konzentrationen der Hauptlegierungselemente entsprechend dem Stand der Technik auf:
10 bis 82 wt% Kobalt,
10 bis 35 wt% Chrom,
8 bis 14 wt% Aluminium,

Rest Nickel mit weiteren optionalen Legierungszusätzen. Solche Legierungszusätze sind für diese Zusammensetzung oder auch andere Zusammensetzungen z.B. Silizium (bis 2 wt%), Rhenium (0,3 bis 5 wt%) und Tantal (bis 8 wt%).

Um eine Mikroporosität in TGO's in bevorzugter Weise zu erreichen, muss die MCrAl-Schicht außerdem zwingend folgende Zusätze zumindest eines Elements aus jeweils einer der Gruppen I, II und III aufweisen:
Gruppe I: mindestens ein sauerstoffaffines Element, d.h. Elemente die thermodynamisch sehr stabile Oxide bilden, aus der Gruppe Yttrium, Cer, Scandium, Lanthan oder andere Lanthantide.
Die Konzentration der Summe dieser Elemente liegt im Bereich 0,02 bis 1 wt%, bevorzugt zwischen 0,05 bis 0,5 wt%.
Gruppe II: mindestens ein Element der Gruppe Hafnium, Zirkonium und Titan, da diese Elemente thermodynamisch sehr stabile Verbindungen mit Stickstoff und Kohlenstoff bilden (Nitride und Karbide);
Die Konzentration der Summe dieser Elemente liegt im Bereich 0,02 bis 1 wt%, bevorzugt 0,05 bis 0,3 wt%.
Gruppe III: Kohlenstoff und/oder Stickstoff, wobei die Konzentration der Summe an Kohlenstoff und Stickstoff 0,005 bis 0,2 wt%, bevorzugt 0,01 bis 0,1 wt% beträgt.

Durch diese zwingend erforderliche Kombination von Elementen für dieses Ausführungsbeispiel aus den drei oben genannten Gruppen wird folgendes erreicht: durch den Zusatz eines oder mehrerer Elemente aus Gruppe I wird die Haftung der Aluminiumoxidschicht auf der MCrAl-Schicht entsprechend dem Stand der Technik stark verbessert.
Die Elemente aus der Gruppe II sind ebenfalls sehr sauerstoffaffine Elemente, jedoch bilden sie gleichzeitig sehr stabile Nitride und Carbide. Da die MCrAl-Schicht sowohl Zusätze von Elementen der Gruppe I als auch der Gruppe II enthält, so werden die Elemente der Gruppe I bevorzugt oxidieren. Die Elemente der Gruppe II werden bevorzugt mit dem in der MCrAlY-Schicht vorhandenen Kohlenstoff und/oder Stickstoff reagieren und somit feine Ausscheidungen von Karbiden und/oder Nitriden bilden.

Würden die Elemente der Gruppe I nicht zugesetzt werden, so würden die Elemente der Gruppe II bevorzugt mit Sauerstoff reagieren, da die betreffenden Oxide der Elemente eine höhere thermodynamische Stabilität aufweisen als die jeweiligen Karbide, Nitride oder Karbonitride. Die Elemente aus Gruppe II würden durch diese Oxidbildung verbraucht und somit würde die Bildung von Karbiden und Nitriden nicht stattfinden.

Da die MCrAl-Schicht die genannten Zusätze aus allen drei Gruppen enthält, werden die Elemente der Gruppe II bei Hochtemperatureinsatz oder vorheriger Wärmebehandlung mit dem von Kohlenstoff und/oder Stickstoff feine Ausscheidungen mit einem typischen Durchmesser von 10 bis 900 nm in Form von Karbiden, Nitriden und/oder Karbonitriden bilden.
Bei einem gezielten Voroxidationsprozess, d.h. vor einer Beschichtung der MCrAl-Haftvermittlerschicht mit einer keramischen Wärmedämmschicht, werden die feinen Ausscheidungen, die sich in Oberflächennähe der MCrAl-Schicht befinden von der nach innen wachsenden Aluminiumoxidschicht eingeschlossen. Bei weiterem Wachstum der Schicht werden die eingeschlossenen Karbide und/oder Nitride oder Karbonitride wegen des lokal ansteigenden Sauerstoffpartialdrucks oxidieren.
Dies ist mit einer Volumenveränderung und Freisetzung von Gasen verknüpft. Diese beiden Prozesse führen zur Bildung sehr feiner Poren mit einem Durchmesser von 10 bis 800nm und Mikrorissen der Länge 10 bis 600nm in der Aluminiumoxidschicht (TGO).

Auf diese Art und Weise erhält man auf der Oberfläche der MCrAl-Schicht die Ausbildung einer gewünschten dehnungstoleranten Aluminiumoxidschicht mit einer Mikroporosität.

## Patentansprüche

1. MCrAl-Schicht,
insbesondere für eine Turbinenschaufel,
wobei M für ein Element der Elemente Fe, Co, Ni steht und wobei eine Aluminiumoxidschicht auf der MCrAl-Schicht angeordnet ist,
**dadurch gekennzeichnet, dass**
die Aluminiumoxidschicht mikroporös ausgebildet ist.

2. MCrAl-Schicht,
wobei M für ein Element der Elemente Fe, Co, Ni steht, insbesondere für eine Turbinenschaufel,
**dadurch gekennzeichnet,**
**dass** die MCrAl-Schicht jeweils zumindest ein Element aus folgenden drei Gruppen I, II und III aufweist:
Gruppe I: Yttrium, Cer, Scandium, Lanthan oder andere Lanthantide,
wobei die Summe der Konzentration im Bereich 0,02 bis 1 wt% liegt,
Gruppe II: Hafnium, Zirkonium, Titan,
wobei die Summe der Konzentration im Bereich 0,02 bis 1 wt% liegt,
Gruppe III: Kohlenstoff oder Stickstoff, wobei die Summe der Konzentration im Bereich 0,005 bis 0,2 wt% liegt.

3. MCrAl-Schicht nach Anspruch 2,
**dadurch gekennzeichnet, dass**
die Summe der Konzentrationen der Elemente aus Gruppe I im Bereich 0,05 bis 0,5 wt% liegt.

4. MCrAl-Schicht nach Anspruch 2,
**dadurch gekennzeichnet, dass**
die Summe der Konzentration der Elemente aus Gruppe II im Bereich 0,05 bis 0,3 wt% liegt.

5. MCrAl-Schicht nach Anspruch 2,
**dadurch gekennzeichnet, dass**
die Summe der Konzentration der Elemente aus Gruppe III im Bereich 0,01 bis 0,1 wt% liegt.

6. MCrAl-Schicht nach Anspruch 1 oder 2,
**dadurch gekennzeichnet, dass**
die MCrAl-Schicht eine NiCoCrAl-Schicht ist.

7. MCrAl-Schicht nach Anspruch 1 oder 2,
**dadurch gekennzeichnet, dass**
die MCrAl-Schicht folgende Zusammensetzung aufweist:
10 bis 82 wt% Kobalt,
10 bis 35 wt% Chrom,
8 bis 14 wt% Aluminium,
optional weitere Legierungszusätze
und Rest Nickel.

8. MCrAl-Schicht nach Anspruch 1 oder 7,
**dadurch gekennzeichnet, dass**
die MCrAl-Schicht weitere Legierungszusätze aufweist und dass als weiterer Legierungszusatz bis 2 wt% Silizium vorhanden ist.

9. MCrAl-Schicht nach Anspruch 1 oder 7,
**dadurch gekennzeichnet, dass**
die MCrAl-Schicht weitere Legierungszusätze aufweist und dass die MCrAl-Schicht als weiteren Legierungszusatz 0,3 bis 5 wt% Rhenium aufweist.

10. MCrAl-Schicht nach Anspruch 1 oder 7,
**dadurch gekennzeichnet, dass**
die MCrAl-Schicht weitere Legierungszusätze aufweist und dass als weiterer Legierungszusatz in der MCrAl-Schicht bis 8 wt% Tantal vorhanden ist.

11. MCrAl-Schicht nach Anspruch 1 oder 2,
**dadurch gekennzeichnet, dass**
die Mikroporosität durch eine Wärmebehandlung und/oder Oxidation in einer sich bildenden Aluminiumoxidschicht erzeugt ist.

12. MCrAl-Schicht nach Anspruch 1 oder 2,
**dadurch gekenzeichnet,** dass
auf der MCrAl-Schicht eine keramischen Wärmedämmschicht angeordnet ist.
